# EUROPÄISCHE PATENTSCHRIFT

(11) **EP 2 839 043 B1**
(45) Veröffentlichungstag und Bekanntmachung des Hinweises auf die Patenterteilung: **23.03.2016**
(21) Anmeldenummer: 13728097.0
(22) Anmeldetag: 16.04.2013
(51) Int. Cl.: C21C 5/52, F27B 3/22, F27B 3/20, F27D 1/12

(54) **EINSATZBAUGRUPPE MIT RAHMENKASTEN UND BETRIEBSSTOFFZUFÜHRUNGSTRÄGER SOWIE ELEKTROLICHTBOGENOFEN DAMIT AUSGERÜSTET UND VERFAHREN ZUM BETRIEB EINES SOLCHEN ELEKTROLICHTBOGENOFEN**
INSERT ASSEMBLY HAVING A FRAME BOX AND FUEL FEED SUPPORT, ELECTRIC ARC FURNACE EQUIPPED WITH SAID ASSEMBLY AND METHOD FOR OPERATING AN ELECTRIC ARC FURNACE OF THIS TYPE
ENSEMBLE INSÉRABLE COMPORTANT UN CAISSON CADRE ET UN SUPPORT D'AMENÉE DE MATIÈRES CONSOMMABLES, FOUR À ARC ÉLECTRIQUE DOTÉ DE CET ENSEMBLE ET PROCÉDÉ DE FONCTIONNEMENT D'UN FOUR À ARC ÉLECTRIQUE DE CE TYPE

(30) Priorität: 17.04.2012 DE 102012007528
(43) Veröffentlichungstag der Anmeldung: 25.02.2015
(73) Patentinhaber: Badische Stahl-Engineering GmbH, 77694 Kehl (DE)
(72) Erfinder: LIBERA, Klaus, 77694 Kehl-Auenheim (DE)
(74) Vertreter: Thämer, Wolfgang
(86) Internationale Anmeldenummer: PCT/DE2013/000193
(87) Internationale Veröffentlichungsnummer: WO 2013/156016

(56) Entgegenhaltungen:
- EP-A1- 0 048 007
- WO-A1-2008/034556
- DE-A1- 19 637 246
- DE-U1- 7 711 990

## Beschreibung

Die Erfindung betrifft eine Einsatzbaugruppe eines Elektrolichtbogenofens mit einem gekühlten Rahmenkasten und mit einem relativ zu diesem bewegbar gelagerten wassergekühlten Betriebsstoffzuführungsträger, einen Elektrolichtbogenofen mit einer derartigen Baugruppe und ein Verfahren zum Betrieb eines Elektrolichtbogenofens, wobei beim Chargieren des Einsatzmaterials der Betriebsstoffzuführungsträger bei gedrosselter Betriebsstoffzufuhr in einer ersten Betriebsposition steht, wobei in der Einschmelzphase die Betriebsstoffzufuhr mindestens zweier Betriebsstoffe eingeschaltet wird, wobei der Betriebsstoffzuführungsträger zunächst in der ersten Betriebsposition verbleibt und wobei in der Frischphase der Betriebsstoffzuführungsträger mittels der Antriebseinheit in eine zweite Betriebsposition bewegt wird, wobei mindestens ein Betriebsstoff eingeschaltet ist.

Aus der DE 196 37 246 A1 ist ein in einem Wandpanel schwenkbar gelagerter Lagerkörper zur Aufnahme einer Lanze bekannt. Zur Abdichtung liegt das Wandpanel mit einer als Teil einer gekrümmten Fläche ausgebildeten Dichtungskante am Lagerkörper an. Die Verstellung der Lanze erfolgt in Abhängigkeit des Rückpralls des ausströmenden Gasstrahls. Durch Hitzeinwirkung und durch Schlackenspritzer kann die Lagerung beschädigt werden und die Dichtungskante des Wandpanels zerstört werden.

In der Folge kann der Elektrolichtbogenofen ausqualmen und der Lagerkörper blockieren.

Der vorliegenden Erfindung liegt daher die Problemstellung zugrunde, bei der Einbringung von zusätzlichen Betriebsstoffen durch die Seitenwand die Ausmauerung des Ofengefäßes und die Umwelt dauerhaft wirksam zu schützen.

Diese Problemstellung wird mit den Merkmalen des Hauptanspruches gelöst. Dazu trägt der Rahmenkasten eine Antriebseinheit des Betriebsstoffzuführungsträgers. In der Bewegungsfuge zwischen dem Rahmenkasten und dem Betriebsstoffzuführungsträger ist mindestens ein Dichtelement angeordnet. Das Dichtelement umfasst Borsten aus einem metallischen Werkstoff. Die Länge der einzelnen Borste entspricht mindestens der dreifachen Breite der Bewegungsfuge. Außerdem sind die Dichtborsten in Richtung des Ofeninnenraums gerichtet.

Beim Betrieb des Elektrolichtbogenofens erfolgt die Verstellung des Betriebsstoffzuführungsträgers in Abhängigkeit der massenspezifisch eingebrachten Energie und des Stabilitätsgrads des Lichtbogens.

Weitere Einzelheiten der Erfindung ergeben sich aus den Unteransprüchen und der nachfolgenden Beschreibung schematisch dargestellter Ausführungsformen.
- Figur 1:: Schnitt durch die Seitenwand beim Beginn des Einschmelzens;
- Figur 2:: Schnitt durch die Seitenwand in der Frischphase;
- Figur 3:: Isometrische Darstellung einer Einsatzbaugruppe von der Ofeninnenseite;
- Figur 4:: Rückansicht von Figur 3;
- Figur 5:: Längsschnitt durch Figur 3;
- Figur 6:: Querschnitt durch Figur 3;
- Figur 7:: Isometrische Schnittansicht des Rahmenkastens;
- Figur 8:: Detail von Figur 5.

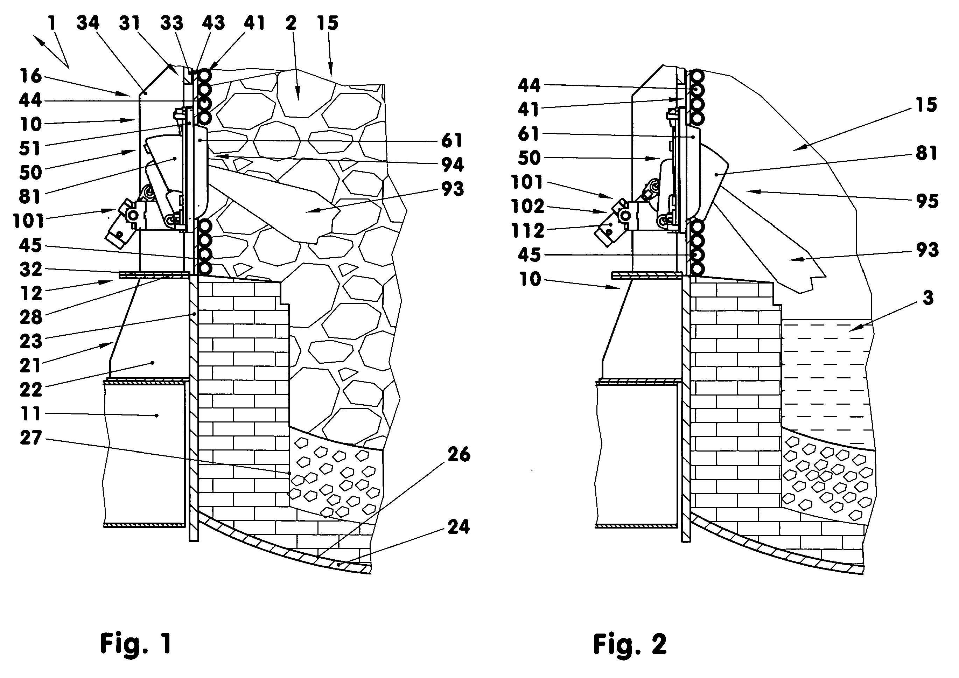

Die Figur 1 zeigt einen stark vereinfacht dargestellten Schnitt durch die Seitenwand eines Elektrolichtbogenofens (10) beim Beginn des Einschmelzens. Der Elektrolichtbogenofen (10) umfasst ein in einer kipp- und abrollbaren Wiege (11) angeordnetes Untergefäß (21) und ein auf dieses aufgesetztes Obergefäß (31).

Das Untergefäß (21) umfasst Auflagepratzen (22), einen Mantel (23) und ein Bodenteil (24). Der Mantel (23) besteht beispielsweise aus einem zylinderabschnittsförmig gewalzten Stahlblech mit einer Dicke zwischen 20 und 50 Millimetern. Das Bodenteil (24) ist im Ausführungsbeispiel konkav gewölbt, wobei die Einsenkung in Richtung des Ofeninnenraums (15) zeigt. Seine Dicke und sein Werkstoff entsprechen beispielsweise der Wandstärke und dem Werkstoff des Mantels (23). Die Dicke des Mantels (23) und des Bodenteils (24) ist beispielsweise abhängig von der Ofengröße und von seinem Abstichgewicht. An der Unterseite des Bodenteils (24) können Prüfelemente, wie z.B. Bodentemperaturmesselemente und/oder die Bodenelektrode eines Gleichstromofens angeordnet sein. Auch die Abstichöffnung des Elektrolichtbogenofens (10) ist im Bodenteil (24) angeordnet.

Die Innenseite (26) des Bodenteils (24) trägt eine Ausmauerung (27). Die Ausmauerung (27) nimmt während des Schmelzprozesses den flüssigen Stahl auf, der z.B. beim Abstich eine Temperatur von etwa 1680 Grad Gelsius hat. Gleichzeitig schützt sie - aufgrund ihrer geringen Wärmeleitfähigkeit - die ungekühlten Stahlteile des Untergefäßes (21). Eine Beschädigung der Ausmauerung (27) kann daher zu einem Versagen des Untergefäßes (21) und in der Folge zu einem Produktionsstillstand des gesamten Stahlwerks führen.

Die Ausmauerung (27) besteht im Wandbereich aus einem feuerfesten Gestein, z.B. Magnesiasteinen. Im mittleren Ofenbereich liegt über den Steinen beispielsweise eine Stampfmasse aus diesem Werkstoff. Auch der Einsatz chemisch gebundener oder pechgebundener Trockenmassen ist denkbar. Bei einem neu zugestellten Ofen mit einer Abstichmasse von 100 Tonnen Flüssigstahl beträgt die Dicke der Ausmauerung (27) am Bodenteil (24) beispielsweise 900 - 1200 Millimeter. Im Bereich des Mantels (23) beträgt sie zwischen 650 Millimeter und 800 Millimeter. Infolge des Verschleißes beim Betrieb des Elektrolichtbogenofens (10) sinkt die Dicke der Ausmauerung am Bodenteil (24) auf etwa 750 Millimeter, im Bereich des Mantels (23) auf etwa 550 Millimeter. Wird eines dieser Verschleißmaße erreicht, muß die Ofenausmauerung (27) - nach dem Erkalten des Ofengefäßes (12) - ausgebessert werden oder der Ofen neu zugestellt werden. Hierzu ist eine Produktionsunterbrechung von mindestens einer Schichtdauer, also z.B. 8 Stunden, erforderlich.

Das Untergefäß (21) trägt das Obergefäß (31), das z.B. mit einem Auflageflansch (32) auf einem Tragflansch (28) des Untergefäßes (21) aufliegt. Das Obergefäß (31) hat einen Tragring (33), der beispielsweise mittels Stützen (34) auf dem Auflageflansch (32) abgestützt ist. Dieser oben liegende Wasserverteilring (33) dient gleichzeitig als Deckelauflagering. Auf Letzterem liegt während des Betriebs des Elektrolichtbogenofens (10) ein Deckel mit Durchführöffnungen für eine oder für drei Elektroden auf.

An der dem Ofeninnenraum (15) zugewandten Seite des Obergefäßes (31) sind Wandkühlelemente (41) angeordnet. Die Höhe eines einzelnen Wandkühlelements (41) entspricht der Höhe des Obergefäßes (31), seine Breite beträgt beispielsweise zwischen 1400 und 1600 Millimeter. Jedes der koaxial im Mantel (33) des Obergefäßes (31) angeordneten Panels (41) umfasst ein außenliegendes Tragblech (43) und an seiner dem Ofeninnenraum (15) zugewandten Innenseite wassergekühlte Rohre (44, 45). Jedes Panel (41) umfasst einen oder zwei Wasserkreisläufe. In der Darstellung der Figur 1 sind die unteren vier Rohre (45) Kupferrohre aus Kupfer oder einer Kupferlegierung und die oberen Rohre (44) Stahlrohre, z.B. aus einem unlegierten oder niedrig legierten warmfesten Stahl. Für die Wasserkühlung sind die Panels (41) beispielsweise an den Wasserverteilring angeschlossen. Während des Ofenbetriebs wird jedes Panel (41) von Wasser mit einem weitgehend konstanten Volumenstrom durchströmt. Die Zulauftemperatur des Wassers kann Umgebungstemperatur oder eine Temperatur von z.B. 60 Grad Celsius aufweisen. Die Wandpanels (41) schützen die dahinter liegenden Stützen (34) und die Umgebung (1) vor der im Ofeninnenraum (15) erzeugten Hitze. Während des Ofenbetriebs kann sich an den Stahlrohren (44) der im Deckeltragring hängenden Panels (41) Schlacke anlagern. Diese Isolationsschicht bewirkt einen zusätzlichen Schutz des Obergefäßes (31).

In das in der Figur 1 dargestellte Wandpanel (41) ist eine Einsatzbaugruppe (50) mit einem gekühlten Rahmenkasten (61) und einem schwenkbar in diesem gelagerten Betriebsstoffzuführungsträger (81) angeordnet. Letzterer ist in den Darstellungen der Figuren 1 - 6 und 8 als Aufnahmekasten (81) ausgebildet.

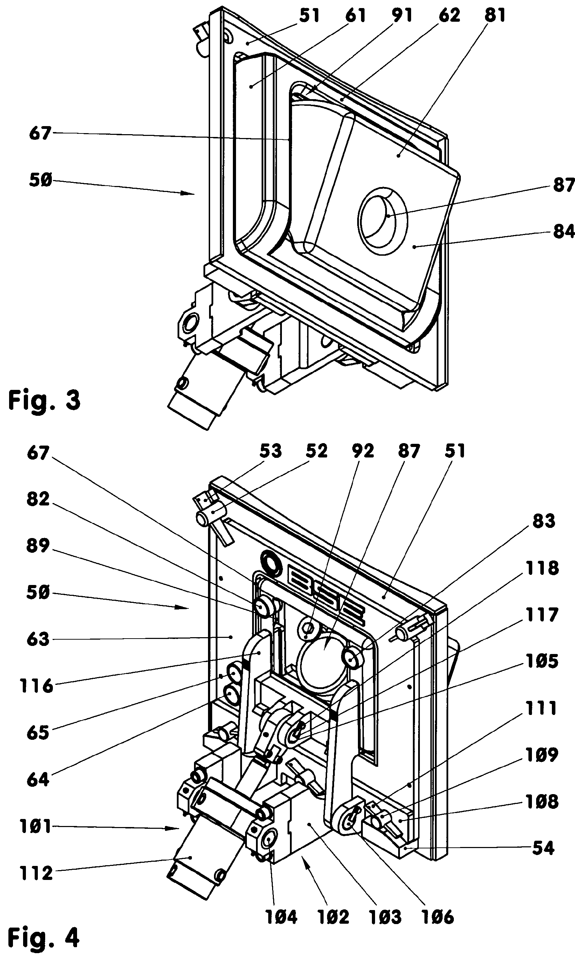

Die Figuren 3 - 8 zeigen die Einsatzbaugruppe (50) und ihre einzelnen Bauteile. Die Einsatzbaugruppe (50) umfasst einen Halterahmen (51), der z.B. am Tragblech (43) des Wandpanels (41) angeschweißt ist. Der Halterahmen (51) hat beispielsweise zwei Haltebolzen (52) und zwei Stützen (54). Er trägt den Rahmenkasten (61), der z.B. mittels Keilen (53) an den Haltebolzen (52) fixiert ist.

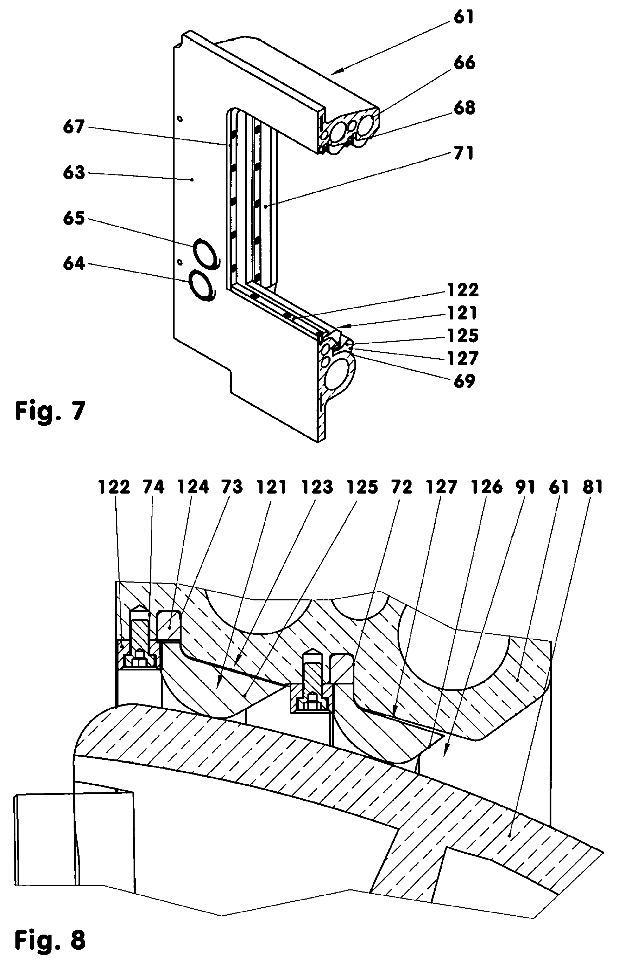

Der Rahmenkasten (61), vgl. Figur 7, ist ein wassergekühltes Bauteil aus Kupfer oder aus einer Kupferlegierung. Er kann als Gussteil gefertigt sein oder als Schweißkonstruktion ausgeführt sein. Der Rahmenkasten (61) hat eine glatte Innenwand (62). Er hat beispielsweise eine Breite von 620 Millimetern, eine Höhe von 575 Millimetern und eine Tiefe von 150 Millimetern. Im eingebauten Zustand, vgl. Figur 1, ist seine Innenseite zumindest annähernd bündig mit einer Tangente an die Rohre (44, 45) des Wandpanels (41). Wasserhydraulisch sind der an der Außenseite (63) angeordnete Zulauf (64) und der Rücklauf (65) des Rahmenkastens (61) beispielsweise an den Wasserverteilring (33) angeschlossen. Innerhalb des Rahmenkastens (61) wird das Kühlwasser durch mehrere parallel oder in Reihe geschaltete Kühlleitungen (66) geleitet. Der Rahmenkasten (61) hat eine Aussparung (67) mit einem z.B. rechteckigen Querschnitt.

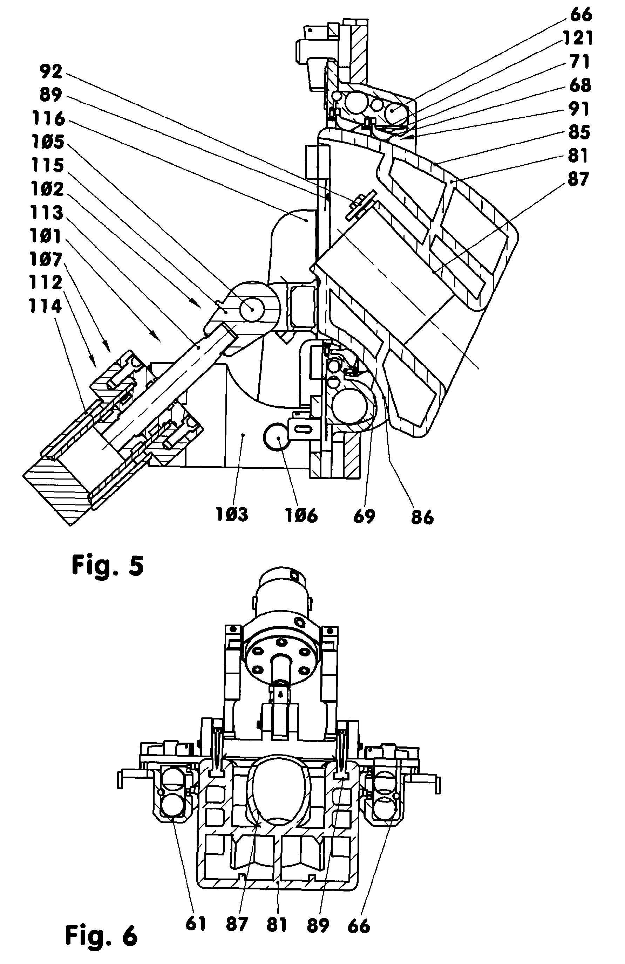

In dem in der Figur 5 dargestellten Längsschnitt wächst die Querschnitsfläche der Aussparung (67) von der Außenseite (63) in Richtung des Ofeninnenraums (15) an. Die Wandungen (68, 69, 71) haben jeweils zwei Aufnahmenuten (72, 73) und zwei Reihen mit Gewindebohrungen (74). Die obere Wandung (68) schließt beispielsweise mit einer horizontalen Ebene einen Winkel von 15 Grad ein. Die untere Wandung (69) ist als Bogenfläche ausgebildet. Die gedachte, z.B. waagerechte Mittellinie dieser Bogenfläche (69) liegt außerhalb der Außenseite (63) des Rahmenkastens (61).

Im Rahmenkasten (61) ist der Aufnahmekasten (81) angeordnet. Auch dies ist ein wassergekühlter Kasten aus Kupfer oder einer Kupferlegierung mit einem Zulauf (82) und mit einem Rücklauf (83). Diese beiden Wasseranschlüsse sind beispielsweise mittels Schläuchen mit dem Wasserverteilring (33) verbunden. Der Aufnahmekasten (81) hat im Ausführungsbeispiel eine glatte, dem Ofeninnenraum (15) zugewandte Vorderseite (84). Diese hat beispielsweise eine Breite von 400 Millimetern und eine Höhe von 400 Millimetern.

Die Oberseite (85) und die Unterseite (86) sind bogenflächenförmig ausgebildet. Beispielsweise sind sie koaxial zur Bogenfläche (69) des Rahmenkastens (61). In dem in der Figur 5 dargestellten Längsschnitt ist die Oberseite (85) um 80 % länger als die Unterseite (86). Der von der Vorderseite (84) und der Tangentialebene an die angrenzende Oberseite (85) eingeschlossene Winkel beträgt im Ausführungsbeispiel 72 Grad.

Der Aufnahmekasten (81) hat einen in Längsrichtung durchgehenden Aufnahmedurchbruch (87). Dieser hat im Ausführungsbeispiel einen weitgehend zylindrischen Querschnitt, der sich zum Ofeninnenraum (15) geringfügig kegelig aufweitet. Beispielsweise beträgt sein Durchmesser 120 Millimeter. Der Aufnahmedurchbruch (87) schließt in der Darstellung der Figur 5 mit der Vorderseite (84) einen Winkel von 70 Grad ein. Dieser Winkel kann zwischen 50 Grad und 90 Grad liegen.

In den Aufnahmedurchbruch (87) kann ein Betriebsstoffzuführungsgerät, z.B. ein Gas-Sauerstoffbrenner, ein Öl-Sauerstoffbrenner, eine Sauerstofflanze, etc. eingesetzt sein. Das eingesetzte Gerät zur Energiezufuhr kann relativ zum Aufnahmekasten (81) fest sein oder translatorisch in diesem verstellbar angeordnet sein. Bei einer translatorischen Verstellung sind sowohl die Antriebseinheit als auch die Lagerung an der Außenseite (63) der Einsatzbaugruppe (50) angeordnet.

Der Aufnahmekasten (81) ist relativ zum Rahmenkasten (61) mittels einer Antriebseinheit (101) schwenkbar. Die Antriebseinheit (101) umfasst ein Getriebe (102), z.B. ein nicht umlauffähiges Gelenkviereck. Im Ausführungsbeispiel ist dies ein viergliedriges Schubgelenk-Getriebe. Es umfasst ein Gestell (103), drei Drehgelenke (104 - 106) und ein antreibbares Schubgelenk (107). Das gesamte Getriebe (102) ist an der Außenseite (16) des Elektrolichtbogenofens (10) angeordnet.

Das Gestell (103) ist am Rahmenkasten (61) z.B. lösbar befestigt. Im Ausführungsbeispiel umfasst das Gestell (103) hierfür ein Tragblech (108), das mittels Bolzen (109) und Sicherungskeilen (111) am Rahmenkasten (61) fixiert ist. Das Gestell (103) des Getriebes (102) kann auch in den Rahmenkasten (61) integriert sein. Beispielsweise bildet dann der Rahmenkasten (61) das Gestell (103).

Im Gestell (103) ist eine z.B. ölhydraulisch doppelt wirkende Zylinder-Kolbeneinheit (112) schwenkbar gelagert. Diese bildet das antreibbare Schubgelenk (107). Im Ausführungsbeispiel ist die Kolbenstange (113) der Zylinder-Kolbeneinheit (112) zwischen zwei Endlagen verfahrbar. Ihr Hub beträgt beispielsweise 55 Millimeter. Es ist aber auch denkbar, die Kolbenstange (113) stufenlos relativ zum Zylinder (114) einzustellen. Hierfür kann die Zylinder-Kolbeneinheit (112) beispielsweise ein Wegmesssystem umfassen und die hydraulische Ansteuerung kann Proportionalventile aufweisen. Auch der Einsatz einer pneumatisch betätigbaren Zylinder-Kolbeneinheit ist denkbar.

Im Kopf (115) der Kolbenstange (113) und im Gestell (103) ist der Aufnahmekasten (81) mittels eines Lagerungshalters (116) schwenkbar gelagert. Beide Lagerstellen (105, 106) sind doppelt ausgebildet. Jede dieser Lagerstellen (105, 106) umfasst beispielsweise Lagerbolzen (117) und Gleithülsen. Die Lagerbolzen (117) sind jeweils mittels eines Sicherungshalters (118) gegen ein Herausrutschen gesichert. Der Lagerungshalter (116) ist im Ausführungsbeispiel beidseitig in einer T-Nut (89) des Aufnahmekastens (81) aufgenommen.

Anstatt des Antriebs mittels der Zylinder-Kolbeneinheit (112) kann der Aufnahmekasten (81) auch mittels eines rotatorischen Antriebs antreibbar sein. Dies ist dann beispielsweise ein hydraulisch, pneumatisch oder elektrisch betätigter Motor.

In der Ausnehmung (67) des Rahmenkastens (61) sind Dichtelemente (121) befestigt, vgl. die Figuren 5, 7 und 8. Im Ausführungsbeispiel sind umlaufend zwei Drahtbürstenringe (123) hintereinander in der Bewegungsfuge (91) zwischen dem Rahmenkasten (61) und dem Aufnahmekasten (81) angeordnet. Die Dichtelemente (121) sind beispielsweise Drahtbürsten (121). Die einzelne Dichtbürste (121) umfasst einen Bürstenträger (124) und Dichtborsten (125). Die beiden Bürstenträger (124) sitzen in den umlaufenden Aufnahmenuten (72, 73). Dort sind sie mittels Halteleisten (122) fixiert, die mittels Schrauben in den Gewindebohrungen (74) befestigt sind. Anstatt Gewindebohrungen können auch Gewindeeinsätze in das Rahmenteil (61) eingesetzt sein.

Der Bürstenträger (124) ist beispielsweise aus einem hitzebeständigen, austenitischen Stahl, z.B. X 15 CrNiSi 20 12 mit der Werkstoffnummer 1.4828 hergestellt. Dieser schweißbare Stahl hat bei Luft eine Temperaturbeständigkeit bis 1050 Grad Celsius und weist eine große Beständigkeit gegen stickstoffhaltige Gase auf. Der einzelne Bürstenträger (124) kann gerade oder gebogen ausgebildet sein.

Die Borsten (125) bestehen im Ausführungsbeispiel ebenfalls aus einem hitzebeständigen Stahl, beispielsweise NiCr 30 20 mit der Werkstoffnummer 1.4860. Dieser z.B. nicht magnetisierbare, punktschweißbare Stahl ist temperaturbeständig mindestens bis 1050 Grad Celsius und hat eine gute Beständigkeit gegen stickstoffhaltige Gase. Die einzelne Borste (125) besteht beispielsweise aus einem gewellten Draht mit einem Durchmesser von 0,5 Millimetern und hat eine Länge von 44 Millimetern. Die Länge der einzelnen Borste (125) ist damit größer als die doppelte Spaltbreite zwischen dem Rahmenkasten (61) und dem Aufnahmekasten (81). Die Dicke des zu den freien Enden (126) hin aufgefächerten Borstenpakets (127) beträgt im Bereich der Enden (126) beispielsweise 15 Millimeter. Am Rahmenkasten (61) liegen die Borsten (125) an der oberen Wandung (68) an. Sie füllen den Querschnitt des Spalts (91) vollständig aus, vgl. die Figuren 5 und 8. Im eingebauten Zustand zeigen die freien Enden (126) in Richtung des Ofeninnenraums (15). Gegebenenfalls werden diese Enden (126) vor der Inbetriebnahme des Elektrolichtbogenofens (10) mittels einer Schicht feuerfester Verbundmasse bestrichen. Während des Betriebs kann sich Schlacke an den Stirnflächen der Enden (126) anlagern.

Beim Einsatz einer translatorisch bewegbaren, wassergekühlten Lanze im schwenkbaren Aufnahmekörper (81) kann der Aufnahmekörper (81) Dichtelemente tragen, um die Bewegungsfuge zwischen diesem und der Lanze abzudichten. Diese Dichtelemente können genauso aufgebaut sein wie die Dichtelemente (121) zwischen dem Rahmenkasten (61) und dem Aufnahmekörper (81).

Auch der Einsatz einer nicht schwenkbaren, sondern nur translatorisch bewegbaren wassergekühlten Lanze, z.B. einer Sauerstofflanze, ist denkbar. Die Lanze bildet dann den relativ zum Rahmenkasten (61) bewegbaren Betriebsstoffzuführungsträger (81). Die Antriebseinheit und die Lagerung sind an der Außenseite des Rahmenkastens (61) angeordnet. In der Ausnehmung (67) des Rahmenkastens (61) sind dann Dichtbürsten (121) angeordnet. Diese sind so ausgebildet, wie im Zusammenhang mit dem ersten Ausführungsbeispiel beschrieben.

Bei der Montage der Einsatzbaugruppe (50) werden beispielsweise außerhalb des Elektrolichtbogenofens (10) die Dichtbürsten (121) am Rahmenkasten (61) befestigt. Der Aufnahmekasten (81) wird in den Lagerungshalter (116) eingesetzt und gegebenenfalls gesichert. Nun wird der Aufnahmekasten (81) von der Außenseite (63) des Rahmenkastens (61) aus in diesen eingeschoben und der Lagerungshalter (116) am Tragblech (108) des Rahmenkastens (61) mittels der Lagerungsbolzen (109) fixiert. Nun kann die Zylinder-Kolbeneinheit (112) am Gestell (103) und am Lagerungshalter (116) montiert werden.

Nach dem Anschweißen des Halterahmens (51) am Wandpanel (41) - dies kann bei aus- oder bei eingebautem Wandpanel (41) erfolgen - kann die Vormontagegruppe am Halterahmen (51) fixiert werden. Hiernach wird die Zylinder-Kolbeneinheit (112) hydraulisch angeschlossen und die flexiblen Kühlwasserverbindungen - gegebenenfalls mit Temperatursensoren - für den Rahmenkasten (61) und den Aufnahmekasten (81) montiert. Gegebenenfalls kann die Einsatzbaugruppe (50) zusätzlich auch elektrisch angeschlossen werden. Zum Abschluss wird ein Betriebsstoffzuführungsgerät, z.B. ein Erdgas-Sauerstoffbrenner, in den Aufnahmedurchbruch (87) eingesetzt und mittels Fixierelementen (92) gesichert. Beispielsweise sitzt die Brennerdüse beabstandet zu der Innenfläche (84) des Aufnahmekastens (81).

Die Leitungen für das fossile Medium und den Sauerstoff werden an die entsprechenden Ventilstände angeschlossen.

Beim Chargieren des Elektrolichtbogenofens (10) mit dem Einsatzmaterial (2), z.B. Schrott, steht der Aufnahmerahmen (81) in der in der Figur 1 dargestellten Lage. In dieser ersten Betriebsposition (94) ist die Innenfläche (84) vertikal ausgerichtet. Der Brenner schließt mit einer horizontalen Ebene, die unterhalb des Brenners angeordnet ist, beispielsweise einen Winkel von 20 Grad ein. Die Brenner arbeiten beispielsweise gedrosselt mit Freihalteluft und/oder mit einer Pilotflamme. Der chargierte Schrott (2) liegt im Untergefäß (21) und im Obergefäß (31).

Nach dem Chargieren werden die Elektroden des Elektrolichtbogenofens (10) eingeschaltet. Der hierbei erzeugte Lichtbogen schmilzt den Schrott (2) ein. Da der Strom von den Elektroden auf die einzelnen Schrottteile überspringt und diese aufschmilzt, ist der hierbei erzeugte Lichtbogen zunächst instabil. Aufgrund der z.B. im Dreieck angeordneten Elektroden ist der Schmelzprozess im Ofengefäß (12) ungleichmäßig. Im Wandbereich, der von den Elektroden am weitesten entfernt ist, ist die Temperatur des Schrotts (2) und des eingeschmolzenen Stahls niedriger als im Bereich der Elektroden. In den genannten Wandbereichen - im Elektrolichtbogenofen (10) kann es mehrere dieser Bereiche geben - sind die Einsatzbaugruppen (50) eingebaut..

Nun wird die Leistung der in der einzelnen Einsatzbaugruppe (50) angeordnete Brenner heraufgeschaltet oder die Brennerflamme gezündet. Hierzu werden z.B. in Abhängigkeit der Zusammensetzung des Einsatzmaterials (2) und der eingebrachten spezifischen elektrischen Energie pro Masse von der Ofenwarte aus die Ventile sowohl des Gases oder Öls als auch des Sauerstoffs am Ventilstand eingeschaltet. Dies kann auch programmgesteuert erfolgen. Beispielsweise werden Gas und Sauerstoff gemeinsam ausgebracht und zünden beim Austreten aus dem Brenner. Die Flamme (93) trifft auf den Schrott (2) vor der Einsatzbaugruppe (50) und schmilzt diesen auf. Die Flamme (93) wird am Schrott (2) auch reflektiert. Aufgrund des flachen Winkels der Flamme (93) zur Horizontalen wird nur ein geringer Anteil der Brennerenergie in die Wandpanels (41) und/oder an die Ausmauerung (27) eingebracht. Hier erfolgt nur ein geringer Verschleiß.

Mit fortschreitender Zeitdauer der Energieeinbringung durch die Elektroden und die Brenner nimmt der Anteil des flüssigen Stahls (3), vgl. Figur 2, zu. Das Volumen des flüssigen Stahls (3) ist geringer als das Volumen des eingesetzten Schrotts (2). Der Lichtbogen des Elektrolichtbogenofens (10) stabilisiert sich. Sobald das Einsatzmaterial (2) vollständig verflüssigt ist, ist der Lichtbogen stabil.

Nach der Einbringung einer spezifischen massenbezogenen elektrischen und fossilen Energiemenge und nach dem Stabilisieren des Lichtbogens wird die Antriebseinheit (101) betätigt. Dies kann von der Ofenwarte aus manuell gesteuert oder automatisch, z.B. programmgesteuert erfolgen. Auch ist es denkbar, die Antriebseinheit (101) in einen Regelkreis einzubinden. Bei einer Fehlfunktion kann dann beispielsweise die Brennerfahrweise entsprechend angepasst werden. Die Kolbenstange (113) der Zylinder-Kolbeneinheit (112) fährt aus und schwenkt den Aufnahmekasten (81) mit dem Brenner in der Darstellung der Figur 5 im Uhrzeigersinn um den Drehpunkt (106) relativ zum Rahmenkasten (61). Der Gesamtschwenkwinkel des Aufnahmekastens (81) ist kleiner als 30 Grad. Im Ausführungsbeispiel beträgt er 25 Grad. Der Aufnahmekasten (81) steht jetzt in der in der Figur 2 dargestellten zweiten Betriebsposition (95). Der Brenner und die Brennerflamme (93) stehen nun in einem Winkel von 45 Grad zur Horizontalen. Beispielsweise kann der Brenner jetzt auch nur mit Sauerstoff betrieben werden.

In der in der Figur 2 dargestellten Frischphase beträgt die Temperatur im Ofeninnenraum (15) bis zu 1700 Grad Celsius. Die außenliegende Antriebseinheit (101) der Einsetzbaugruppe (50) ist gut gegen Einwirkungen dieser Hitze geschützt. Zusätzlich verhindern die Dichtelemente (121) ein Ausqualmen des Ofens (10). An den Wänden wird die thermische Energie aus dem Ofeninnenraum (15) durch die Wandpanels (41), den Rahmenkasten (61) und den Aufnahmekasten (81) an das Kühlwasser übertragen. Die in den Spalt (91) strahlende Hitze trifft auf die Enden (126) der Borsten (125). Von dort wird sie entlang der Borsten (125) auf den Bürstenträger (124) und an den Rahmenkasten (61) übertragen und mit dem Kühlwasser abgeführt. Die Abdichtung (121) verhindert ein Ausqualmen des Ofens, wenn der Druck im Ofeninnenraum (15) höher ist als in der Umgebung (1). Sie verhindert ebenfalls unter anderem aufgrund der dichten Borstenpackung das Ansaugen von Falschluft, wenn der Druck im Ofeninnenraum (15) niedriger ist als in der Umgebung (1).

Die Brenner dienen in der Frischphase zusätzlich dazu, ein Aufschäumen des Stahlbades zu bewirken. Die Flamme (93) ist jetzt stärker gebündelt, beispielsweise wird der Sauerstoff mit Überschall in das Stahlbad (3) eingeblasen. Die Ausmauerung (27) wird durch den Brenner nur geringfügig zusätzlich erwärmt. Die sich bildende Schaumschlacke hüllt den Lichtbogen ein und stabilisiert diesen zusätzlich. Außerdem vermindert sie die Hitzestrahlungen auf die Wandpanels (41). Während des Betriebs können Schlackenspritzer auf die Wandpanels (41) treffen. Die Schlacke haftet an den Stahlrohren (44) an, während sie von den Kupferteilen (45, 61, 81) abblättert. Die von der Innenwand (62) des Rahmenkastens (61) beabstandeten Dichtelemente (121) können nur von wenigen Spritzern direkt getroffen werden. Diese Spritzer haften dann nur an den Enden (126) der Borsten (125) an, da sie an den angrenzenden Kupferteilen keinen Halt finden. Das Schwenken des Aufnahmerahmens (81) wird dadurch nicht beeinträchtigt oder behindert.

Vor dem Abstich wird der Elektrolichtbogenofen (10) zum Abschlacken gekippt. Danach erfolgt der Abstich in die Gegenrichtung. Bis auf einen Sumpf wird hierbei der flüssige Stahl (3) in eine Pfanne gegossen.

Die Antriebseinheit (101) kann nun wieder angesteuert werden, um den Aufnahmerahmen (81) in die vertikale Position, vgl. Figur 1, zu schwenken. Die Kolbenstange (113) der ZylinderKolben-Einheit (112) wird eingefahren. Der Aufnahmerahmen (81) wird in der Darstellung der Figur 5 entgegen dem Uhrzeigersinn um den Drehpunkt (106) geschwenkt. Sowohl die Einsatzbaugruppe (50) als auch der Brenner sind beim nächsten Chargieren gut geschützt gegen Beschädigungen durch herabfallenden Schrott.

Beim Einsatz einer linear verfahrbaren Lanze kann diese mit Kohle und/oder mit Sauerstoff betrieben werden. Beim Chargieren steht der Aufnahmekasten (81) in der Ausgangsposition der Figur 1. Die Lanze ist zurückgefahren, so dass die in Richtung des Ofeninnenraums (15) zeigende Lanzenspitze nicht aus dem Aufnahmekasten (81) herausragt. Mit zunehmender Schmelzdauer wird die Lanze weiter ausgefahren und beispielsweise mittels des Aufnahmekastens (81) geschwenkt. Das Ausfahren der Lanze und das Schwenken des die Lanze aufnehmenden Aufnahmekastens (81) können gestuft oder stufenlos erfolgen. Beispielsweise werden beide Parameter in Abhängigkeit der Energieeinbringung in den Ofen und der Lichtbogenstabilität geregelt oder gesteuert.

Auch Kombinationen der verschiedenen Ausführungsbeispiele sind denkbar.

### Bezugszeichenliste:

- 1: Umgebung
- 2: Einsatzmaterial, Schrott
- 3: Flüssigstahl, Stahlbad

- 10: Elektrolichtbogenofen
- 11: Wiege
- 12: Ofengefäß
- 15: Ofeninnenraum
- 16: Außenseite

- 21: Untergefäß
- 22: Auflagepratzen
- 23: Mantel
- 24: Bodenteil
- 26: Innenseite
- 27: Ausmauerung
- 28: Tragflansch

- 31: Obergefäß
- 32: Auflageflansch
- 33: Tragring, Wasserverteilring
- 34: Stützen

- 41: Wandkühlelemente, Panels
- 43: Tragblech
- 44: wassergekühlte Rohre, Stahl
- 45: wassergekühlte Rohre, Kupfer

- 50: Einsatzbaugruppe
- 51: Halterahmen
- 52: Haltebolzen
- 53: Keile

- 54: Stützen

- 61: Rahmenkasten
- 62: Innenwand
- 63: Außenseite
- 64: Zulauf
- 65: Rücklauf
- 66: Kühlleitungen
- 67: Aussparung, Ausnehmung
- 68: obere Wandung
- 69: untere Wandung, Bogenfläche

- 71: seitliche Wandung
- 72: Aufnahmenut
- 73: Aufnahmenut
- 74: Gewindebohrung

- 81: Betriebsstoffzuführungsträger, Aufnahmekasten
- 82: Zulauf
- 83: Rücklauf
- 84: Vorderseite, Innenfläche
- 85: Oberseite
- 86: Unterseite
- 87: Aufnahmedurchbruch
- 89: T-Nut

- 91: Bewegungsfuge, Spalt
- 92: Fixierelemente
- 93: Flamme
- 94: erste Betriebsposition
- 95: zweite Betriebsposition

- 101: Antriebseinheit
- 102: Getriebe, viergliedriges Schubgelenk-Getriebe

- 103: Gestell
- 104: Drehgelenk
- 105: Drehgelenk
- 106: Drehgelenk
- 107: Schubgelenk
- 108: Tragblech
- 109: Bolzen

- 111: Sicherungskeile
- 112: Zylinder-Kolbeneinheit
- 113: Kolbenstange
- 114: Zylinder
- 115: Kopf von (113)
- 116: Lagerungshalter
- 117: Lagerbolzen
- 118: Sicherungshalter

- 121: Dichtelemente, Drahtbürsten, Dichtbürste
- 122: Halteleisten
- 123: Drahtbürstenringe
- 124: Bürstenträger
- 125: Dichtborsten
- 126: freies Ende von (125)
- 127: Borstenpaket

## Patentansprüche

1. Einsatzbaugruppe (50) eines Elektrolichtbogenofens (10) mit einem gekühlten Rahmenkasten (61) und mit einem relativ zu diesem bewegbar gelagerten wassergekühlten Betriebsstoffzuführungsträger (81), **dadurch gekennzeichnet,**
- **dass** der Rahmenkasten (61) eine Antriebseinheit (101) des Betriebsstoffzuführungsträgers (81) trägt,
- **dass** in der Bewegungsfuge (91) zwischen dem Rahmenkasten (61) und dem Betriebsstoffzuführungsträger (81) mindestens ein Dichtelement (121) angeordnet ist,
- **dass** das Dichtelement (121) Borsten (125) aus einem metallischen Werkstoff umfasst,
- **dass** die Länge der einzelnen Borste (125) mindestens der dreifachen Breite der Bewegungsfuge (91) entspricht und
- **dass** die Dichtborsten (125) in Richtung des Ofeninnenraums (15) gerichtet sind.

2. Einsatzbaugruppe (50) nach Anspruch 1, **dadurch gekennzeichnet, dass** die Antriebseinheit (101) ein viergliedriges Schubgelenk-Getriebe (102) umfasst.

3. Einsatzbaugruppe (50) nach Anspruch 1, **dadurch gekennzeichnet, dass** der Betriebsstoffzuführungsträger (81) ein relativ zum Rahmenkasten (61) schwenkbar gelagerter Aufnahmekörper (81) ist.

4. Einsatzbaugruppe (50) nach Anspruch 1, dass die Antriebseinheit (101) an der dem Ofeninnenraum (15) abgewandten Außenseite (16) des Elektrolichtbogenofens (10) angeordnet ist.

5. Einsatzbaugruppe (50) nach Anspruch 1, **dadurch gekennzeichnet, dass** die Borsten (125) aus einem nicht magnetisierbaren Stahl bestehen, der mindestens bis zu einer Temperatur von 1100 Grad Celsius beständig ist.

6. Elektrolichtbogenofen (50) mit einem Obergefäß (31), mit mindestens einer in diesem angeordneten Einsatzbaugruppe (50) nach Anspruch 1 und mit mindestens einem Betriebsstoffzuführungsgerät.

7. Verfahren zum Betrieb eines Elektrolichtbogenofens (10) nach Anspruch 6,
- wobei beim Chargieren des Einsatzmaterials der Betriebsstoffzuführungsträger (81) bei gedrosselter Betriebsstoffzufuhr in einer ersten Betriebsposition (94) steht,
- wobei in der Einschmelzphase die Betriebsstoffzufuhr mindestens zweier Betriebsstoffe eingeschaltet wird, wobei der Betriebsstoffzuführungsträger (81) zunächst in der ersten Betriebsposition (94) verbleibt,
- wobei in der Frischphase der Betriebsstoffzuführungsträger (81) mittels der Antriebseinheit (101) in eine zweite Betriebsposition (95) bewegt wird, wobei mindestens ein Betriebsstoff eingeschaltet ist und
- wobei die Verstellung des Betriebsstoffzuführungsträgers (81) in Abhängigkeit der massenspezifisch eingebrachten Energie und des Stabilitätsgrads des Lichtbogens erfolgt.

8. Verfahren nach Anspruch 7, **dadurch gekennzeichnet,**
- **dass** in der Einschmelzphase das Betriebsstoffzuführungsgerät einen Winkel zwischen 15 und 25 Grad mit einer horizontalen, unterhalb des Gerätes angeordneten Ebene einschließt und
- **dass** in der Frischphase dieser Winkel auf 30 Grad bis 45 Grad erhöht wird.

## Claims

1. An insert unit (50) of an electric arc furnace (10), comprising a cooled frame case (61) and a water-cooled operating material feeding carrier (81) mounted for movement relative to said frame case, **characterized in that**
- frame case (61) supports a drive unit (101) of the operating material feeding carrier (81),
- at least one sealing element (121) is disposed in the movement interspace (91) between frame case (61) and operating material feeding carrier (81),
- said sealing element (121) comprises bristles (125) of a metal material;
- the length of each individual bristle (125) is equal to at least three times the width of movement interspace (91), and
- the sealing bristles (125) are directed towards the interior furnace cavity (15).

2. An insert unit (50) as claimed in claim 1, **characterized in that** the drive unit (101) comprises a four-element slider transmission linkage (102).

3. An insert unit (50) as claimed in claim 1, **characterized in that** the operating material feeding carrier (81) is a receiving body (81) mounted pivotally relative to the frame case (61).

4. An insert unit (50) as claimed in claim 1, **characterized in that** the drive unit (101) is arranged on the outside (16) of the electric arc furnace (10) to face away from the interior furnace cavity (15) thereof.

5. An insert unit (50) as claimed in claim 1, **characterized in that** the bristles (125) consist of a non-magnetizable steel stable to a temperature of at least 1100 degrees Celsius.

6. An electric arc furnace (50) comprising a top vessel (31), at least one insert unit (50) as claimed in claim 1 arranged therein, and at least one operating material feed assembly.

7. A method of operating an electric arc furnace (10) as claimed in claim 6,
wherein,
- as the feedstock is charged, the operating material feeding carrier (81) assumes a first operating position (94) and the feeding-in of operating material is restricted,
- in the melt-down phase, the operating material feed of at least two operating materials is activated, with the operating material feeding carrier (81) remaining in its first operating position (94) at the time, and
- in the oxidizing phase, the operating material feeding carrier (81) is moved to a second operating position (95) by means of drive unit (101), with at least one operating material feed activated, and
- the repositioning of the operating material feeding carrier (81) is effected in dependence on the mass-specific energy introduced by, and on the degree of stability of the electric arc.

8. A method as claimed in claim 7, **characterized in that**,
- in the melt-down phase, the operating material feeder includes an angle of between 15 and 25 degrees with a horizontal plane positioned under the feeder, and **in that**
- the aforesaid angle is increased to 30 to 45 degrees in the oxidizing phase.

## Revendications

1. Ensemble insérable (50) d'un four à arc électrique (10), comportant un caisson cadre refroidi (61) et un dispositif d'approvisionnement de matières consommables (81) refroidi à l'eau et logé de manière mobile par rapport à ce caisson cadre, **caractérisé en ce**
- **que** le caisson cadre (61) porte une unité d'entraînement (101) du dispositif d'approvisionnement de matières consommables (81),
- **qu'**au moins un élément d'étanchéité (121) est placé dans le joint de dilatation (91), entre le caisson cadre (61) et le dispositif d'approvisionnement de matières consommables (81),
- **que** l'élément d'étanchéité (121) comprend des poils (125) fabriqués à partir d'un matériau métallique,
- **que** la longueur de chaque poil (125) correspond au moins à la triple largeur du joint de dilatation (91) et
- **que** les poils d'étanchéité (125) sont orientés vers l'intérieur du four (15).

2. Ensemble insérable (50) selon la revendication 1, caractérisé en ce l'unité d'entraînement (101) comprend un mécanisme articulé à glissière (102) composé de quatre éléments.

3. Ensemble insérable (50) selon la revendication 1, **caractérisé en ce que** le dispositif d'approvisionnement de matières consommables (81) est un corps de réception (81) monté de façon pivotante par rapport au caisson cadre (61).

4. Ensemble insérable (50) selon la revendication 1, **caractérisé en ce que** l'unité d'entraînement (101) est située du côté extérieur (16) du four à arc électrique (10), opposé à l'intérieur du four.

5. Ensemble insérable (50) selon la revendication 1, **caractérisé en ce que** les poils (125) sont en acier non magnétisable résistant au moins jusqu'à une température de 1100 °C.

6. Four à arc électrique (50) comportant une carcasse supérieure (31), au moins un ensemble insérable (50) selon la revendication 1 disposé dans cette carcasse et au moins un dispositif d'approvisionnement de matières consommables

7. Procédé de fonctionnement d'un four à arc électrique (10) selon la revendication 6,
- le dispositif d'approvisionnement de matières consommables (81) se trouvant dans une première position de fonctionnement (94),lors du chargement du matériau de remplissage, lorsque l'approvisionnement en matières consommables est ralenti,
- l'approvisionnement d'au moins deux matières consommables étant activé pendant la phase de fusion, le dispositif d'approvisionnement de matières consommables (81) restant d'abord dans la première position de fonctionnement (94),
- le dispositif d'approvisionnement de matières consommables (81) étant déplacé, pendant la phase d'affinage, dans une deuxième position de fonctionnement (95) à l'aide de l'unité d'entraînement (101), l'approvisionnement d'au moins une matière consommable étant activé et
- le réglage du dispositif d'approvisionnement de matières consommables (81) se faisant en fonction de la densité de l'énergie apportée et du degré de stabilité de l'arc électrique.

8. Procédé selon la revendication 7, **caractérisé en ce**
- **que** le dispositif d'approvisionnement de matières consommables, pendant la phase de fusion, présente un angle compris entre 15 et 25 degrés par rapport à un plan disposé horizontalement au-dessous du dispositif et
- **que** cet angle s'agrandit pendant la phase d'affinage entre 30 et 45 degrés.
